# FASCICULE DE BREVET EUROPEEN

(11) **EP 0 614 942 B1**
(45) Date de publication et mention de la délivrance du brevet: **01.10.1997**
(21) Numéro de dépôt: 94400373.0
(22) Date de dépôt: 22.02.1994
(51) Int. Cl.: C08L 33/12

(54) **Compositions thermoplastiques transparentes à base de polyméthacrylate de méthyle résistantes au choc et à tenue à la chaleur améliorée**
Transparente thermoplastische Zusammensetzungen aus schlagfestem Polymethylmethacrylat mit verbesserter Wärmebeständigkeit
Clear thermoplastic compositions based on impact-resistant polymethylmethacaylat with improved heat stability

(30) Priorité: 12.03.1993 FR 9302855
(43) Date de publication de la demande: 14.09.1994
(73) Titulaire: ELF ATOCHEM S.A., 92800 Puteaux (FR)
(72) Inventeur: Vuillemin, Bruno, F-64000 Pau (FR); Heim, Philippe, F-64000 Pau (FR)
(74) Mandataire: Luziau, Nelly

(56) Documents cités:
- EP-A- 0 245 647

## Description

La présente invention concerne des compositions à base de polyméthacrylate de méthyle (PMMA) qui présentent de bonnes propriétés de résistance mécanique (notamment résistance au choc et à la flexion) et une bonne tenue à la chaleur tout en conservant une excellente transparence.

Le polyméthacrylate de méthyle, fabriqué industriellement par polymérisation radicalaire, est une matière thermoplastique de plus en plus utilisée par suite de ses propriétés optiques exceptionnelles (brillance, transparence très élevée avec 92 % de transmission lumineuse dans le visible), sa dureté, son aptitude au thermoformage, sa tenue au vieillissement, à la corrosion et aux agents atmosphériques et la facilité avec laquelle on peut le façonner (découpage, polissage, collage, pliage).

Ce polymère thermoplastique, du fait qu'il est rigide, est susceptible de se casser pendant les diverses phases de sa transformation ainsi que pendant son transport et son utilisation.

Pour améliorer leur résistance au choc, on peut leur ajouter des additifs renforçateurs à base de matières élastomères. Ces additifs sont généralement des substances polymères ayant une structure à plusieurs couches, l'une au moins étant constituée par une phase élastomère, et dont l'indice de réfraction est ajusté pour obtenir un matériau transparent.

Ces additifs sont ajoutés en quantités variables. Etant donné que c'est la phase élastomère contenue dans l'additif qui confère la résistance au choc, cet additif est ajouté à la matière thermoplastique rigide pour avoir une proportion convenable de l'élastomère.

Toutefois, l'amélioration de la résistance au choc est obtenue aux dépens des propriétés optiques, des résistances mécaniques, comme la résistance à la flexion et de la tenue à la chaleur. Cette dernière peut être déterminée par la valeur de la température de ramollissement VICAT, mesurée par exemple suivant la norme AFNORT T51021.

On connaît des polymères thermoplastiques pour lesquels la tenue à la chaleur a été améliorée. C'est le cas des polymères de méthacrylate de méthyle modifiés chimiquement, par exemple par imidification, ou bien encore de polymères statistiques par exemple des polymères du méthacrylate de méthyle/α-méthylstyrène/N-cyclohexylmaléimide.

Cependant, ces polymères ne sont pas résistants au choc. Pour améliorer cette résistance au choc, compte tenu de leur indice de réfraction élevé, seule l'utilisation d'additifs dont la phase élastomère est à base de polybutadiène peut conduire à un matériau transparent. Mais le bon vieillissement de tel matériau se trouve alors considérablement altéré.

La présente invention a donc pour objet de nouvelles compositions à base de polyméthacrylate de méthyle (PMMA) qui n'aient pas les inconvénients précédents et, en particulier, qui associent des propriétés de tenue à la chaleur, de résistance au choc et à la flexion et de transparence, ainsi qu'un excellent vieillissement.

Les compositions selon l'invention sont des compositions thermoplastiques transparentes qui comprennent du polyméthacrylate de méthyle ayant un pourcentage de triades syndiotactiques supérieur ou égal à 70 % et un additif renforçateur à structures multicouches, dont au moins l'une des couches est constituée d'un élastomère acrylique.

Le polymère thermoplastique rigide utilisé dans l'invention est du polyméthacrylate de méthyle ayant un pourcentage en triades syndiotactiques d'au moins 70 % et, de préférence, d'au moins 75 %. Ce polymère peut être fabriqué par tout procédé connu, par exemple par voie radicalaire à basse température.

Un procédé particulièrement approprié pour préparer le PMMA à taux élevé en triades syndiotactiques est décrit dans la demande de brevet français n° 2.679.237 déposée le 19 juillet 1991 par la Demanderesse. Ce procédé consiste à préparer le PMMA par polymérisation anionique du monomère méthacrylate de méthyle en milieu de préférence apolaire et en présence d'un système d'amorçage comprenant (1) un amorceur de formule R-M dans laquelle M est un métal alcalin ou alcalino-terreux et R est un radical alkyle à chaîne droite ou ramifiée contenant 2 à 6 atomes de carbone ou un radical aryle ou aryalkyle et (2) un alcoolate de métal alcalin comprenant un groupement alcoxy, de formule R'OM' où M' est un métal alcalin et R' a la formule R¹(OR²)ₘ dans laquelle R¹ est un radical alkyle linéaire ou ramifié ayant de 1 à 6 atomes de carbone, un radical arylalkyle ou alkylaryle, R² est un radical alkylène linéaire ou ramifié ayant de 2 à 4 atomes de carbone et m est le nombre entier 1, 2 ou 3.

L'additif renforçateur à associer au PMMA syndiotactique peut être tout polymère à structure multicouches (≧ 2) dont au moins l'une des couches est constituée d'élastomère.

Ainsi, on peut utiliser un produit à deux couches de morphologie "mou-dur" dont la première couche élastomère (coeur) est notamment à base de poly(acrylate d'alkyle) et dont la couche externe est constituée d'une substance thermoplastique rigide formée par polymérisation d'un mélange de monomères comprenant au moins 50 % en poids de méthacrylate d'alkyle , tel qu'il est décrit dans le brevet FR-A-2.092.389.

Peut aussi être utilisé un additif à structure "dur-mou-dur", comme décrit au brevet FR-A-2.159.822, dont le premier stade (coeur), non élastomère, est polymérisé à partir des monomères choisis parmi ceux utilisés pour constituer le polymère thermoplastique rigide devant servir de matrice à laquelle est ajouté cet additif, dont le stade élastomère intermédiaire est notamment un copolymère (acrylate d'alkyle-styrène) et dont le stade final est constitué à partir de monomères formant le polymère thermoplastique rigide.

Un autre additif utilisable dans l'invention est celui décrit dans le document EP-A-270865 qui est constitué d'un polymère à structure multicouches comprenant un stade central (coeur) à base d'élastomère réticulé intimement mélangé à une résine acrylique, éventuellement une première couche de ladite résine acrylique greffée sur le polymère formant le coeur, une seconde couche en élastomère réticulé greffé sur ladite première couche de résine et une troisième couche en résine acrylique greffée sur la deuxième couche formée d'élastomère réticulé.

En particulier, l'additif décrit dans le document EP-A-270865 est formé de 5 à 60 % en poids de stade central, de 0 à 55 % en poids de résine acrylique formant la première couche, de 20 à 50 % en poids d'élastomère réticulé pour former la deuxième couche, et de 15 à 35 % en poids de résine acrylique pour constituer la couche externe.

Dans le stade coeur, la quantité d'élastomère est comprise, par exemple, entre 0,01 et 10 % en poids.

La résine acrylique utilisée dans ce document peut être un homopolymère d'esters alkyliques d'acide méthacrylique et/ou un copolymère de ces esters avec des quantités mineures d'esters alkyliques et/ou alkoxyalkyliques d'acide acrylique, dans lesquels le group alkyle contient de 1 à 8 atomes de carbone et/ou de monomères vinyliques comme le styrène et ses dérivés. On peut utiliser, par exemple, avec du méthacrylate de méthyle, de 0 à 25 % en poids d'esters acryliques.

Les élastomères réticulés sont choisis parmi les produits ayant une température de transition vitreuse égale ou inférieure à 25°C. Ces élastomères peuvent être obtenus par exemple à partir d'acrylates d'alkyle ou d'alkoxyalkyle dans lesquels le groupe alkyle contient de 1 à 8 atomes de carbone ou de monomères à insaturation éthylénique comme le butadiène, le butadiène substitué.

Les compositions selon l'invention peuvent comprendre de 40 à 99 % en poids de PMMA syndiotactique et de 1 à 60 % en poids d'additifs renforçateurs et, de préférence, de 65 à 95 % de PMMA et de 5 à 35 % d'additifs.

Ces compositions peuvent contenir d'autres additifs usuels, comme des stabilisants à la dégradation par oxydation, par la chaleur, ou par la lumière ultraviolette, des colorants, des pigments, etc...

Les compositions sont particulièrement utiles pour préparer des plaques extrudées, des objets obtenus par injection ou moulage, ayant une bonne résistance à la chaleur et une résistance au choc améliorée

Les exemples suivants, non limitatifs, illustrent l'invention.

### Exemple 1

On prépare une composition thermoplastique renforcée à partir de 75 % en poids de PMMA syndiotactique et de 25 % en poids d'additif renforçateur. Le PMMA syndiotactique a été obtenu par polymérisation anionique selon le procédé décrit dans la demande de brevet n° 2.679.237 mentionnée précédemment ses caractéristiques sont les suivantes :
Mn = 90 000
Indice de polydispersité (IP) = 2,5
% triades syndiotactiques = 78 %
Tg = 128 °C

L'additif renforçateur est un latex acrylique dont les particules ont un diamètre moyen d'environ 200 nm et de structure quadricouche tel que préparé à l'exemple 2 du document EP-A-270865. Le mélange est extrudé d'une manière connue pour obtenir des granulés. A partir de ces granulés, on moule des éprouvettes par injection, dont on mesure les résistances au choc (IZOD entaillé) et à la flexion ainsi que la température VICAT B.

La résistance au choc (IZOD entaillé) est déterminée suivant la norme ISO 180, la résistance à la flexion (module d'élasticité en flexion) selon la norme ISO R 378 et la température VICAT B, selon la norme AFNORT T51021.
Module de flexion = 1600 ± 10 MPA
Résistance au choc IZOD entaillé = 7 KJ/m²
Température de VICAT B = 112°C
Bonne tenue au vieillissement
Les produits sont transparents.

### Exemple 2 (comparatif)

On prépare une composition thermoplastique renforcée comme à l'exemple 1, en utilisant le même latex acrylique dans les mêmes proportions.

Le polymère thermoplastique est du PMMA préparé par voie radicalaire suivant un procédé en suspension classique. Ce PMMA comprend un pourcentage de triades syndiotactiques compris entre 50 % et 60 %.

Les propriétés mécaniques et thermiques déterminées sur des éprouvettes, comme à l'exemple 1, sont les suivantes :
Module de flexion = 1410 ± 40 MPA
Résistance au choc IZOD entaillé = 6 KJ/m²
Température de VICAT B = 102°C
Bonne tenue au vieillissement
Les produits sont transparents.

On peut noter, en comparant, les produits de deux exemples précédents que, les produits selon l'invention, tout en gardant leur transparence, ont une meilleure tenue à la chaleur, un module de flexion plus élevé et une résistance au choc améliorée par rapport à du PMMA moins syndiotactique.

Des essais ont été réalisés pour comparer les produits selon l'invention, comprenant du PMMA de Tg élevée et un taux élevé de triades syndiotactiques à des polymères thermoplastiques acryliques de Tg élevée mais non syndiotactiques.

### Exemple 3 (comparatif)

On opère comme à l'exemple 1, mais on remplace le PMMA syndiotactique par du PMMA partiellement imidifié de Tg égale à 132°C.

Le produit obtenu est opaque.

Les propriétés mécaniques et thermiques mesurées comme indiqué à l'exemple 1 sont les suivantes :
Module de flexion = 1560 ± 20 MPA
Résistance au choc IZOD entaillé = 3 KJ/m²
Température de VICAT B = 114°C

### Exemple 4 (comparatif)

On opère comme à l'exemple 1, mais on remplace le PMMA syndiotactique par un copolymère statistique de méthacrylate de méthyle/α-méthylstyrène/N-cyclohexyl maléimide de Tg égale à 134°C.

Le produit obtenu est opaque.

Les propriétés mécaniques et thermiques mesurées comme à l'exemple 1, sont les suivantes :
Module de flexion = 1590 ± 20 MPA
Résistance au choc IZOD entaillé = 4 KJ/m²
Température de VICAT B = 115°C

### Exemple 5

On opère comme à l'exemple 1, mais la composition comprend 10 % en poids d'additif renforçateur et 90 % en poids de PMMA obtenu par polymérisation anionique et ayant les caractéristiques suivantes :
Mn = 60 000
Indice de polydispersité (IP) = 2,4
% triades syndiotactiques = 79 %
Tg = 128 °C

Les propriétés mécaniques et thermiques sont indiquées au tableau. Le produit est transparent et présente une bonne tenue au vieillissement.

### Exemple 6

On opère comme à l'exemple 5, mais la composition contient 70 % en poids de PMMA syndiotactique.

Les propriétés sont données au tableau. Le produit est transparent et présente une bonne tenue au vieillissement.

### Exemples 7 et 8 (comparatifs)

On opère comme à l'exemple 2, mais les compositions des exemples 7 et 8 comprennent respectivement 90 % en poids de PMMA radicalaire/10 % en poids et latex et 70 % en poids de PMMA radicalaire/30 % en poids de latex. Les produits sont transparents et les propriétés sont indiquées dans le tableau ci-après.

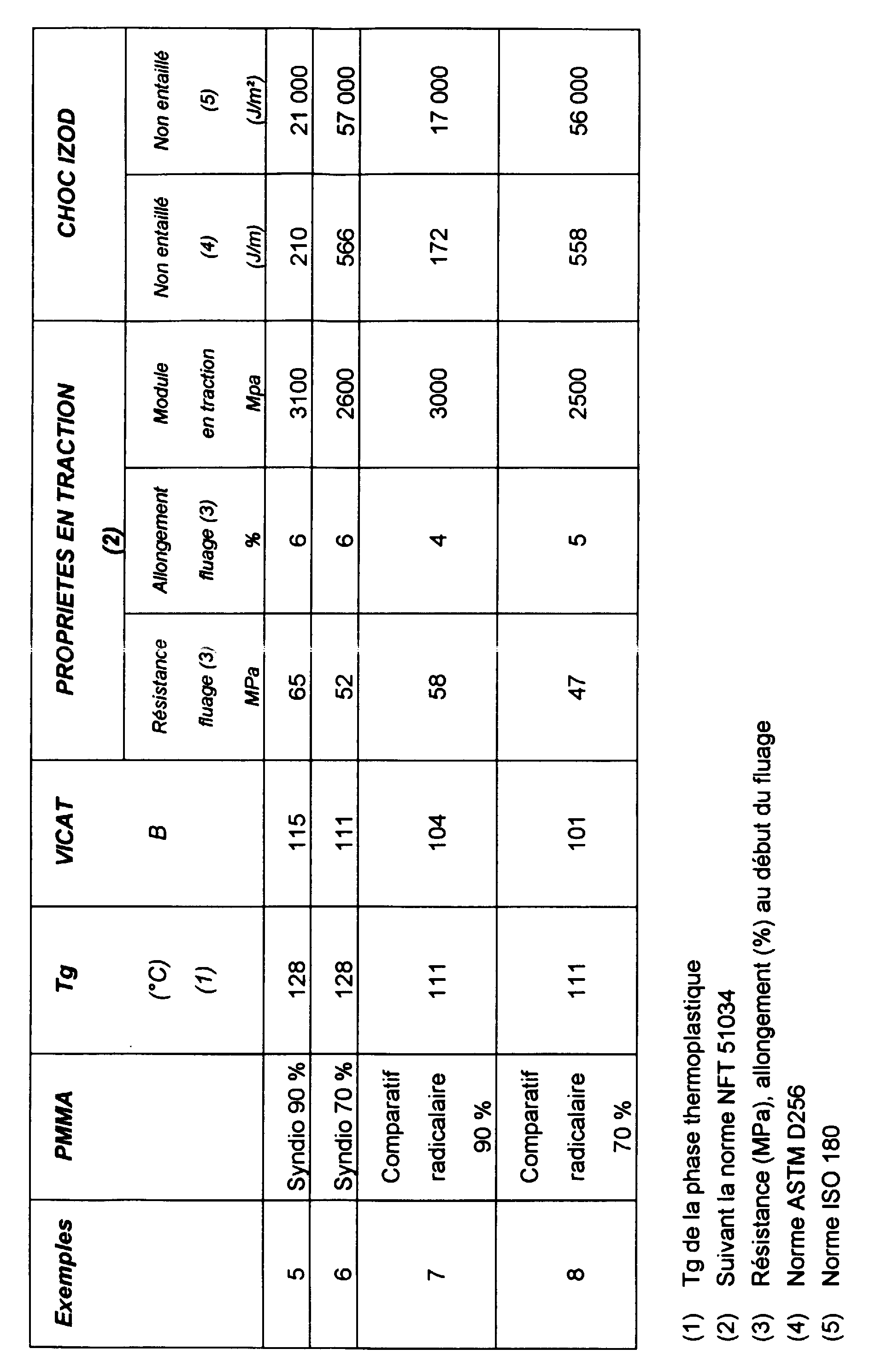

## Revendications

1. Compositions thermoplastiques transparentes résistantes au choc comprenant du polymère de méthacrylate de méthyle ayant un pourcentage de triades syndiotactiques supérieur ou égal à 70 % obtenu par polymérisation anionique en présence d'un système d'amorçage comprenant un amorceur et un alcoolate de métal alcalin contenant un groupe alcoxy, et un additif renforçateur à structure multicouches, au moins l'une des couches étant constituée d'un élastomère.

2. Compositions conformes à la revendication 1 caractérisées en ce qu'elles comprennent entre 40 % et 99 % en poids de polymère de méthacrylate de méthyle et de 1 % à 60 % d'additif renforçateur.

3. Compositions conformes à l'une des revendications 1 et 2, caractérisées en ce que le PMMA a un taux de triades syndiotactiques supérieur ou égal à 78 %.

4. Compositions conformes à l'une quelconque des revendications 1 à 3 caractérisées en ce que l'additif renforçateur comprend au moins une couche élastomère à base de polyacrylate d'alkyle ou polyacrylate d'alkoxyalkyle dans lequel le groupe alkyle a de 1 à 8 atomes de carbone.

5. Objets façonnés résistant à la chaleur et au choc comprenant une composition conforme à l'une des revendications 1 à 4.

6. Objets façonnés selon la revendication 5, obtenus par extrusion, injection ou moulage.

## Patentansprüche

1. Schlagfeste, transparente thermoplastische Zusammensetzungen, enthaltend ein Methylmethacrylatpolymer mit einem Prozentsatz an syndiotaktischen Triaden oberhalb oder gleich 70 %, erhalten mittels anionischer Polymerisation in Gegenwart eines Startersystems, das einen Starter und ein Alkalimetallalkoholat umfaßt, enthaltend eine Alkoxygruppe und ein Verstärkungsadditiv mit Mehrschichtstruktur, wobei mindestens eine der Schichten aus einem Elastomer besteht.

2. Zusammensetzungen nach Anspruch 1, dadurch gekennzeichnet, daß sie 40 bis 99 Gew.-% Methylmethacrylatpolymer und 1 bis 60 Gew.-% Verstärkungsadditiv umfassen.

3. Zusammensetzungen nach Anspruch 1 oder 2, dadurch gekennzeichnet, daß das PMMA einen Gehalt an syndiotaktischen Triaden oberhalb oder gleich 78 % aufweist.

4. Zusammensetzungen nach einem der Ansprüche 1 bis 3, dadurch gekennzeichnet, daß das Verstärkungsadditiv mindestens eine Elastomerenschicht auf Basis von Polyalkylacrylat oder Polyalkoxyalkylacrylat umfaßt, wobei die Alkylgruppe 1 bis 8 Kohlenstoffe besitzt.

5. Hitzebeständige und schlagfeste Formteile, enthaltend eine Zusammensetzung nach einem der Ansprüche 1 bis 4.

6. Formteile nach Anspruch 5, enthalten mittels Extrusion, Spritzgießen oder Formpressen.

## Claims

1. Impact-resistant transparent thermoplastic compositions comprising methyl methacrylate polymer which has a percentage of syndiotactic triads which is higher than or equal to 70 %, obtained by anionic polymerization in the presence of an initiator system comprising an initiator and an alkali metal alcoholate containing an alkoxy group, and a reinforcing additive of multilayer structure, at least one of the layers consisting of an elastomer.

2. Compositions in accordance with Claim 1, characterized in that they comprise between 40 % and 99 % by weight of methyl methacrylate polymer, and from 1 % to 60 % of reinforcing additive.

3. Compositions in accordance with either of Claims 1 and 2, characterized in that the PMMA has a syndiotactic triad content higher than or equal to 78 %.

4. Compositions in accordance with any one of Claims 1 to 3, characterized in that the reinforcing additive includes at least one elastomeric layer based on polyalkyl acrylate or polyalkoxyalkyl acrylate in which the alkyl group has from 1 to 8 carbon atoms.

5. Heat- and impact-resistant articles comprising a composition in accordance with one of Claims 1 to 4.

6. Articles according to Claim 5, obtained by extrusion, or injection or other moulding.
